# FASCICULE DE BREVET EUROPEEN

(11) **EP 3 631 420 B1**
(45) Date de publication et mention de la délivrance du brevet: **31.07.2024**
(21) Numéro de dépôt: 18726842.0
(22) Date de dépôt: 01.06.2018
(51) Int. Cl.: G01N 21/41, G01N 21/47, G01N 21/55, G01N 21/77

(54) **PROCEDE DE DETECTION OPTIQUE**
VERFAHREN ZUR OPTISCHEN DETEKTION
OPTICAL DETECTION METHOD

(30) Priorité: 02.06.2017 FR 1754926
(43) Date de publication de la demande: 08.04.2020
(73) Titulaire: Université de Lille, 59800 Lille (FR); Centre National de la Recherche Scientifique, 75794 Paris Cedex 16 (FR); Institut national de recherche pour l'agriculture, l'alimentation et l'environnement, 75007 Paris (FR); Institut National des Sciences Appliquées de Toulouse (INSAT), 31077 Toulouse Cedex 14 (FR)
(72) Inventeur: SENEZ, Vincent, 59780 Baisieux (FR); VLANDAS, Alexis, 59650 Villeneuve d'Ascq (FR); LAMANT, Sébastien, 59800 Lille (FR); CATHALA, Bernard, 44240 La Chapelle-sur-Erdre (FR); MOREAU, Céline, 44300 Nantes (FR); VERONESE, Gabrielle, 31370 Lautignac (FR); BOZONNET, Sophie, 31500 Toulouse (FR); LAVILLE, Elisabeth, 31500 Toulouse (FR); CLERET, Mégane, 31400 Toulouse (FR)
(74) Mandataire: Cabinet Nony
(86) Numéro de dépôt international: PCT/EP2018/064496
(87) Numéro de publication internationale: WO 2018/220189

(56) Documents cités:
- WO-A1-03/062334
- WO-A1-2012/004536
- JP-A- 2010 265 450
- US-A1- 2006 226 008
- US-A1- 2017 038 380
- SHOUICHI SAKAKIHARA ET AL: "A single-molecule enzymatic assay in a directly accessible femtoliter droplet array", LAB ON A CHIP, vol. 10, no. 24, 1 January 2010 (2010-01-01), pages 3355, XP055085580, ISSN: 1473-0197, DOI: 10.1039/c0lc00062k
- HUIYAN LI ET AL: "Hydrogel droplet microarrays with trapped antibody-functionalized beads for multiplexed protein analysis", LAB ON A CHIP, vol. 11, no. 3, 1 January 2011 (2011-01-01), pages 528 - 534, XP055485674, ISSN: 1473-0197, DOI: 10.1039/C0LC00291G

## Description

La présente invention concerne la détection de la sensibilité d'un ou plusieurs polymères à un composé, en particulier celle d'un ou plusieurs biopolymères à une enzyme.

Dans la suite du document, on appelle 'polymère' selon l'invention un polymère naturel ou synthétique, homopolymère ou hétéropolymère, dont la structure peut être cristalline, amorphe ou hybride (amorphe et cristalline), ou un mélange de 'polymères' définis comme ci-dessus.

Le polymère selon l'invention (unique ou en mélange) peut être complémenté par un agent chimique créant des liaisons covalentes entre les chaînes du polymère (ou du mélange de polymères). Cet agent chimique peut être une résine thermodurcissable, fonction des chaînes à lier. On appelle 'résine' un corps chimique ayant la capacité de former des liaisons covalentes avec le 'polymère' par un apport d'énergie de type thermique, photonique ou chimique.

Par 'composé' on entend un agent chimique ou biologique ayant la capacité de modifier chimiquement ou physiquement l'indice de réfraction et/ou la géométrie du dépôt de 'polymère'.

Dans de nombreux domaines techniques et industriels, l'identification et l'étude d'enzymes ayant une activité de dégradation envers des polymères naturels ou synthétiques constituent un enjeu majeur.

Par exemple, certaines enzymes de dégradation, par exemple hydrolytiques, constituent un outil essentiel pour générer des biocarburants à partir de la biomasse riche en lignocelluloses.

Plus précisément, la paroi végétale est une structure complexe formée de polymères enchevêtrés (cellulose, hémicelluloses, lignines, pectines, etc.) ; les enzymes de dégradation sont par exemple employées pour rompre les chaînes cellulosiques et hémicellulosiques en des sucres destinés à être fermentés afin de créer du bioéthanol, entre autres applications.

A cet effet, il est intéressant d'employer des dispositifs techniques qui permettent la détection, de manière rapide, simple et fiable, de l'activité de dégradation d'un enzyme, ou d'une combinaison d'enzymes, envers un polymère ou une combinaison de polymères.

Il est en particulier courant de mettre en oeuvre des dispositifs colorimétriques dédiés, qui utilisent des réactions chimiques pour révéler l'activité enzymatique. Ces dispositifs colorimétriques emploient pour cela des colorants ou des indicateurs chimiques de détection.

La plupart des tests enzymatiques qui existent permettent d'étudier une enzyme ou un type de microorganisme exprimant une enzyme sous le format de plaque multi-puits dans les puits de laquelle on vient ajouter un substrat (par exemple un polymère) qui, sous l'action de l'enzyme, se transforme en un produit fluorescent ou coloré. Ce format nécessite de produire des substrats modifiés (ajout d'une molécule fluorescente ou d'un composé chimique coloré). Il est aussi possible de révéler la présence d'un produit réactionnel par ajout d'un réactif chromo génique. Dans ces deux cas, les volumes de matériel sont de quelques microlitres au minimum. Il demande des outils robotiques évolués et coûteux, et des capteurs de photons extrêmement sensibles.

Les dispositifs colorimétriques, pour la détection de l'activité hydrolytique envers un ou plusieurs polymères, sont ainsi souvent complexes à utiliser, nécessitent de nombreuses manipulations et réactifs. Lorsqu'aucun substrat ou réactif chromogénique n'est utilisé, il est nécessaire d'employer des outils analytiques comme la spectrométrie de masse, la chromatographie, la spectrométrie infra-rouge ou encore la résonance magnétique nucléaire. Malgré les nombreux avantages de ces outils (sensibilité, spécificité de détection de l'acte catalytique), ils nécessitent des équipements coûteux et demandent une expertise particulière pour leur utilisation.

D'autres dispositifs utilisent l'interférométrie pour détecter l'activité de dégradation d'un polymère.

Ces dispositifs comportent pour cela au moins un mince film transparent de polymère rapporté sur un support réfléchissant (classiquement du silicium). L'épaisseur de ce film transparent est comprise dans une gamme de valeurs permettant l'apparition d'une couleur particulière due à un phénomène optique d'interférences, du fait qu'une partie du rayon incident est réfléchie à l'interface air/film, tandis qu'une autre partie du rayon incident est réfractée puis réfléchie à l'interface film / support. L'interférence des rayons réfléchis et des rayons réfractés crée une figure d'interférences. La couleur résultante correspond à la longueur d'onde où le phénomène d'interférences constructives est maximal.

Un dispositif de ce type est décrit dans la demande FR 2 962 545, étant prévu en particulier pour détecter l'activité hydrolytique envers un polymère, typiquement un polysaccharide, constituant principalement le matériau du film transparent mince déposé sur le support réfléchissant.

Les études menées ont montré que, pour un temps d'incubation de quelques dizaines de minutes, cette méthode possède un seuil de sensibilité de 125 à 1 000 fois plus faible que les méthodes classiquement employées dans l'identification d'enzymes.

Cette méthode présente toutefois certaines limitations.

Elle provoque en effet une importante perte de matière lors de la fabrication du film mince puisqu'une grande partie de la surface du support doit être revêtue de polymère, et ce de manière continue, pour permettre la manifestation d'interférences lumineuses. En utilisant 1a technologie d'enduction centrifuge, la perte de matière est considérable (plus de 90%), ce qui présente un inconvénient majeur en vue d'une industrialisation, ou bien lorsque le polymère à tester n'est disponible qu'en très faible quantité.

L'étalement d'un unique polymère ou d'un unique mélange de polymères par support représente également une limite de cette méthode.

US 2017/038380 A1 décrit une méthode et un système pour analyser une la cinétique d'interaction des protéines incluant le positionnement d'un capteur sur un prisme.

WO 2012/004536 A1 décrit un dispositif colorimétrique pour la détection d'une activité enzymatique hydrolytique à l'égard d'au moins un polymère d'intérêt.

L'article de Shouichi Sakakihara et al. : « A single-molecule enzymatic assay in a directly accessible femtoliter droplet array », LAB ON A CHIP, vol. 11, no. 24, 2010, page 3355, décrit un réseau de gouttelettes dans lequel les gouttelettes sont fixées sur le substrat et sont directement accessibles de l'extérieur.

L'article de Huiyan Li et al. : « Hydrogel droplet microarrays with trapped antibody-functionalized beads for multiplexed protein analysis », LAB ON A CHIP, vol. 11, no. 3, 2011, pages 528-534, décrit un microréseau d'anticorps obtenu par le piégeage de microbilles recouvertes d'anticorps dans des gouttelettes d'alginate qui ont été déposées sur une lame de verre.

Il existe donc un besoin pour un nouveau procédé de détection d'activité enzymatique remédiant à tout ou partie des inconvénients ci-dessus, et en particulier ne nécessitant pas une grande quantité de polymère.

L'invention vise également à disposer, si cela est souhaité, d'un procédé associé permettant de mesurer précisément et quantitativement l'hydrolyse d'un polymère par une enzyme, par exemple en suivant la cinétique d'hydrolyse.

### Procédé de détection

Selon un premier objet, la présente invention concerne un procédé de détection de la sensibilité d'un polymère ou d'un mélange de polymères à un composé, par exemple une ou plusieurs enzymes, comportant les étapes consistant à :
- exposer une pluralité de micro-dépôts individualisés comportant le polymère ou le mélange de polymères au composé, et
- détecter une variation d'aspect d'un ensemble de micro-dépôts exposés au composé et/ou une variation des dimensions et/ou de l'indice de réfraction d'au moins l'un des micro-dépôts exposé au composé, liée(s) à une interaction entre le polymère ou le mélange de polymères et le composé.

La présente invention concerne aussi un procédé de détection de la sensibilité d'un ou plusieurs polymères et/ou d'un ou plusieurs mélanges de polymères à un composé, comportant les étapes consistant à :
- exposer une pluralité de micro-dépôts individualisés comportant le ou les polymères et/ou le ou les mélanges de polymères au composé, et
- détecter par interférométrie une variation d'aspect d'un ensemble de micro-dépôts exposé au composé et/ou une variation des dimensions et/ou de l'indice de réfraction d'au moins l'un des micro-dépôts exposé au composé, liée(s) à une interaction entre le ou les polymères et/ou le ou les mélanges de polymères et le composé.

La surface du ou des micro-dépôts peut être éclairée par une lumière adaptée, de préférence monochromatique.

Les micro-dépôts selon l'invention peuvent être monocouches, c'est-à-dire comporter une seule couche et/ou être multicouches, c'est-à-dire comporter plusieurs couches superposées.

Chaque couche peut comporter le polymère ou le mélange de polymères.

Dans le cas où le micro-dépôt est monocouche, ce dernier peut se présenter sous la forme d'un plot unique comportant le polymère ou le mélange de polymères. La monocouche est disposée sur un support, de préférence au contact de ce dernier. De préférence, cette monocouche est de forme lenticulaire.

Dans le cas où le micro-dépôt est multicouche, ce dernier peut présenter deux couches, notamment avec une architecture coeur-coquille (« core-shell » en anglais). Le micro-dépôt peut alors présenter une première couche correspondant à un coeur, et une deuxième couche correspond à une coquille.

La première couche peut être disposée sur le support, de préférence au contact de ce dernier, et peut être de forme lenticulaire.

La deuxième couche peut recouvrir au moins partiellement, de préférence intégralement, la première couche et peut présenter une forme complémentaire de la première couche.

Les première et deuxième couches peuvent chacune présenter une face en regard du support dite face intérieure et une face opposée à la face en regard du support dite face extérieure.

De préférence, la face intérieure de la première couche est au contact du support.

De préférence, la face extérieure de la première couche est convexe et au contact de la face intérieure de la deuxième couche.

Le micro-dépôt comportant deux couches avec une architecture coeur-coquille peut présenter un coeur comprenant par exemple un seul premier polymère et une coquille comprenant par exemple un seul deuxième polymère différent du premier, ou un coeur comprenant plusieurs polymères et une coquille comprenant plusieurs polymères, ou un coeur comprenant un seul polymère et une coquille comprenant plusieurs polymères, ou encore un coeur comprenant plusieurs polymères et une coquille comprenant un seul polymère.

Le type de micro-dépôts choisi est adapté à l'application visée.

De préférence, l'épaisseur des micro-dépôts est choisie pour permettre la formation d'une figure d'interférences lorsque les micro-dépôts sont éclairés par une lumière adaptée.

L'interaction ci-dessus peut s'accompagner de l'apparition d'un contraste, visible à l'oeil nu, d'un ensemble de micro-dépôts par rapport aux micro-dépôts voisins non exposés au composé, ainsi que d'une variation de la figure d'interférences au niveau de chaque micro-dépôt, observable avec un faible grossissement, par exemple supérieur ou égal à x5, par exemple x20.

L'apparition de ce contraste constitue un moyen simple et rapide pour mettre en évidence la sensibilité du ou des polymères, de préférence du polymère, à l'égard du composé.

La variation de la figure d'interférences offre un moyen de mesure plus fin de l'interaction.

L'étape d'exposition des micro-dépôts au composé peut comprendre une période d'incubation à température ambiante, qui peut durer par exemple de 1 à 240 minutes. Cette étape peut être suivie d'une étape de lavage et d'une étape de séchage.

Lorsque l'interaction entre le ou les polymères et le composé provoque une dégradation du ou des polymères par le composé, le micro-dépôt contenant le ou les polymères va diminuer de volume. Si le ou les polymères ne sont pas sensibles au composé mis en présence, le micro-dépôt contenant le ou les polymères va maintenir sensiblement son volume et sa forme.

De préférence, lorsque l'interaction entre le polymère et le composé provoque une dégradation du polymère par le composé, le micro-dépôt contenant le polymère va diminuer de volume. Si le polymère n'est pas sensible au composé mis en présence, le micro-dépôt contenant le polymère va maintenir sensiblement son volume et sa forme.

La détection d'une variation du volume d'au moins un micro-dépôt peut s'effectuer par interférométrie, entre autres, par observation de la variation d'une figure d'interférences observée, cette variation de volume ayant lieu sous l'effet d'une interaction entre le ou les polymères et/ou le ou les mélanges de polymères, de préférence entre le polymère ou le mélange de polymère, et le composé. De préférence, cette détection est effectuée après grossissement de la figure d'interférences t.

La détection par interférométrie s'accompagne avantageusement de la reconstruction du volume du micro-dépôt à partir de la localisation des franges d'interférences.

La détection par interférométrie permet ainsi une approche plus quantitative de la sensibilité du polymère vis-à-vis du composé.

L'épaisseur des micro-dépôts est de préférence comprise entre 100 nm et 1 500 nm, mieux entre 100 et 1000 nm, l'épaisseur de chaque micro-dépôt passant avantageusement par un seul maximum.

Ainsi, selon un mode de réalisation, chaque micro-dépôt a une surface extérieure convexe.

La plus grande dimension des micro-dépôts est de préférence comprise entre 10 µm et 100 µm.

De préférence, les micro-dépôts ont un contour de forme sensiblement circulaire.

Les micro-dépôts, d'échelle micrométrique, sont de préférence déposés de façon à former des macro-motifs discernables les uns des autres à l'oeil nu, d'échelle millimétrique. Ces macro-motifs sont de préférence distants et disjoints les uns des autres.

Les macro-motifs peuvent être disposés comme les puits d'une grille multi-puits pour dépôt robotisé, par exemple une grille à 96 puits.

Cela peut faciliter l'emploi d'outils robotiques pour déposer un ou plusieurs composés à tester sur les macro-motifs et ensuite l'analyse des variations d'aspect éventuelles au niveau de chaque macro-motif de façon analogue à l'observation d'une réaction au sein de chaque puits.

Selon un mode de réalisation préféré, les micro-dépôts sont disposés sous la forme de points de trame (classique ou stochastique), l'espacement entre les points de trame étant de préférence suffisamment faible pour que le revêtement formé par les micro-dépôts apparaisse, au sein d'un macromotif, continu à l'oeil nu à 25 cm de distance punctum proximum). La trame peut être régulière, ainsi que la taille des micro-dépôts. Autrement dit, chaque micro-dépôt peut ne pas être discernable à l'oeil nu, tandis que les macro-motifs le sont.

Il existe de nombreuses techniques qui permettent de réaliser un tel arrangement de micro-dépôts : la photolithographie (Rao et al, 2014), le microcontact (Voskuhl, et al, 2014) et l'impression jet d'encre (Komuro, et al, 2013). L'arrangement, qui peut être périodique, peut notamment être sous la forme d'un réseau ou d'une matrice de micro-dépôts.

Selon un mode de réalisation préféré, les micro-dépôts sont obtenus par impression par jet d'encre.

Les avantages de l'impression jet d'encre sont (i) la faible valeur des volumes éjectés (de l'ordre du picolitre, modulable selon les propriétés du liquide ou les paramètres d'éjection, permettant une grande densité de micro-dépôts), (ii) l'absence de contact avec le support solide (supprime tout dommage du support et/ou de la tête d'impression), (iii) l'existence d'un réservoir d'encre externe à la tête d'impression, qui rend possible la réalisation de plusieurs milliers de macro-motifs de micro-dépôts avant épuisement de l'encre, ce qui améliore grandement la reproductibilité des dépôts, et (iv) une haute cadence d'impression, par exemple jusqu'à 500 gouttelettes à la seconde.

Le support sur lequel les micro-dépôts sont situés peut être solide ou flexible, plan ou non.

Le support est de préférence non poreux et lisse

En variante, le support est nanostructuré pour contrôler la mouillabilité.

Selon un mode de réalisation, le support consiste en un matériau opaque ou transparent présentant une surface supérieure ayant des propriétés réfléchissantes. Cela peut faciliter la formation d'interférences observables en lumière réfléchie.

Par « réfléchissante », on entend ici une réflexion optique totale ou partielle, de type spéculaire. La réflexion concerne de préférence la plage de longueurs d'ondes du domaine visible.

Le support consiste avantageusement en une galette de silicium (couramment dénommée « wafer »).

De préférence, les micro-dépôts sont situés sur un support hydrophobe. L'hydrophobie du support réduit le risque de coalescence de gouttelettes lors de l'impression, et permet l'obtention d'un dépôt d'épaisseur plus grande que sur une surface hydrophile.

Le support peut être rendu hydrophobe par toute technique connue de l'homme du métier.

Un traitement par des composés perfluorés, tels que des composés porteurs de groupes perfluorocarbonés, peut être mis en oeuvre. On peut citer en exemple le traitement par le gaz C₄F₈.

En variante, un traitement au perfluorodecyltrichlorosilane (FDTS) est mis en oeuvre.

Dans une autre variante, un traitement par voie humide est mis en oeuvre, par exemple par immersion du support pendant une durée de 2 à 18h dans une solution préparée selon les spécificités ci-après, puis séchage :

| | |
|---|---|
| Hexane | 14 mL |
| Dichlorométhane | 6 mL |
| Acide acétique | 0,1 mL |
| 3-methacryloxypropyltrimethoxysilane | 0,1 mL |

Le support peut présenter un revêtement hydrophobe de 100 nm d'épaisseur ou moins, sur lequel les micro-dépôts sont réalisés.

Le composé dont on étudie l'interaction avec le ou les polymères et/ou le ou les mélanges de polymères, de préférence avec le polymère ou le mélange de polymères, est typiquement une enzyme ou un ensemble d'enzymes, l'interaction entre le composé et le ou les polymères, de préférence entre le composé et le polymère, étant de préférence une dégradation enzymatique, notamment une hydrolyse enzymatique du ou des polymères, de préférence du polymère, par le composé.

Le ou les polymères peuvent être dégradables par une enzyme ou un ensemble d'enzymes.

A titre d'enzyme particulièrement adaptée, on peut citer les enzymes de type hydrolases, mais pas exclusivement.

Lors de l'étape d'exposition des micro-dépôts au composé, ce dernier est de préférence en solution, notamment en solution aqueuse.

Lorsqu'il s'agit d'une enzyme, celle-ci est typiquement en solution aqueuse, dans des conditions propices à une hydrolyse enzymatique.

Par « hydrolyse enzymatique », on désigne un mécanisme mis en oeuvre par une enzyme de type hydrolase, catalysant une réaction biochimique d'hydrolyse.

Parmi les enzymes de type hydrolase, on peut citer en particulier les enzymes ayant une activité hydrolytique envers les biopolymères.

Parmi ces enzymes aptes à hydrolyser des biopolymères, on peut citer en particulier les glycosides hydrolases, qui incluent les glycosidases (ou agissant avec un mécanisme 'exo') lorsqu'elles agissent avec un mécanisme d'attaque des extrémités réductrices ou non-réductrices du polymère, ainsi que les enzymes (agissant avec un mécanisme `endo') capables d'hydrolyser les liaisons internes à un polymère.

Par « glycoside hydrolases », on englobe entre autres les xylanases, les cellulases, les chitinases, les pectinases, les mannases, et la Cellulyve (marque déposée).

Parmi les enzymes hydrolytiques de biopolymères, on peut citer par exemple les protéases, les estérases, les nucléases, les ligninases.

Le polymère ou le mélange de polymères étudié par le procédé de l'invention est de préférence présent dans les micro-dépôts selon une teneur comprise de 99,5% à 95% en poids par rapport au poids total de la couche desdits dépôts dans laquelle il est présent.

De préférence, le polymère étudié par le procédé de l'invention est de préférence présent dans les micro-dépôts selon une teneur comprise de 99,5% à 95% en poids par rapport au poids total desdits dépôts.

Le ou les polymères, de préférence le polymère, peut être choisi parmi les biopo lymères.

De tels biopolymères peuvent se présenter sous une forme isolée (c'est-à-dire des chaînes de polymères distinctes), agrégée (c'est-à-dire des chaînes de polymères entremêlées) ou cristallisée (c'est-à-dire des chaînes de polymères organisées selon un motif répétitif ordonné).

Le ou les polymères peuvent être des bio-polymères, notamment choisi dans le groupe constitué par les oligosaccharides et polysaccharides tels que la cellulose, le xylane, la pectine, le chitosane, la chitine, le xyloglucane, le bétaglucan, et l'arabinoxylane ; les peptides et les protéines tels que l'albumine de sérum bovin ou humain et la gluténine ; les acides nucléiques tels que les acides désoxyribonucléiques et les acides ribonucléiques ; la cutine, la subérine et la lignine.

De préférence, le polymère est un bio-polymère, notamment choisi dans le groupe constitué par les oligosaccharides et polysaccharides tels que la cellulose, le xylane, la pectine, le chitosane, la chitine, le xyloglucane, et l'arabinoxylane ; les peptides et les protéines tels que l'albumine de sérum bovin ou humain et la gluténine ; les acides nucléiques tels que les acides désoxyribonucléiques et les acides ribonucléiques ; la cutine, la subérine et la lignine.

Le mélange de polymères peut comporter un bio-polymère, notamment choisi dans le groupe constitué par les oligosaccharides et polysaccharides tels que la cellulose, le xylane, la pectine, le chitosane, la chitine, le xyloglucane, le bétaglucan, et l'arabinoxylane ; les peptides et les protéines tels que l'albumine de sérum bovin ou humain et la gluténine ; les acides nucléiques tels que les acides désoxyribonucléiques et les acides ribonucléiques ; la cutine, la subérine et la lignine.

Le ou les polymères, de préférence le polymère, est avantageusement immobilisé sur le support.

Cette immobilisation peut être générée par des liaisons (i) de type covalentes ou « chimiques » (réticulation) et/ou (ii) de type non covalentes ou « physiques » (électrostatiques, hydrogènes, force de Van der Waals).

Dans le cas (i) ci-dessus, les micro-dépôts contiennent par exemple une résine présente selon une teneur comprise de 0,5% à 5% en poids par rapport au poids total des micro-dépôts, cette résine étant de préférence une résine thermodurcissante, par exemple mélamine-formaldéhyde.

Pour le choix et la mise en oeuvre d'une telle résine, on peut se référer aux documents suivants : Ducéré et al. Sensors and Actuators B: Chemical 2005, 106(1), 331-334, Wu et al. Séparation and Purification Technology 2009, 68(1), 97-104, et Schuler et al. Biomacromolecules 2001, 2(3), 921-926.

Par exemple, la réticulation par des résines mélamine-urée-formaldéhyde ou mélamine-formaldéhyde (désignées encore « MUF » ou « MF ») présente les avantages suivants :
- la réaction de réticulation peut avoir lieu avec de nombreuses fonctions chimiques (alcool, amine, phénol), permettant ainsi de réticuler un grand nombre de classes de biopolymères ;
- il existe des formulations de résine soluble dans l'eau ;
- la réticulation est simple : le monomère est stable à température ambiante et il réagit lorsque le film est porté à 90°C en atmosphère sèche pendant une heure, ce traitement étant compatible avec la majorité des biopolymères.

Dans le mode de réalisation où le composé est une enzyme, le procédé selon l'invention permet d'analyser l'activité de dégradation enzymatique de polymères ou de mélanges de polymères, naturels, typiquement de biopolymères tels que des polysaccharides ou des lignines, ou de polymères synthétiques, dans un contexte où le nombre d'enzymes à tester est grand et le coût du test est réduit. L'invention permet de réaliser le test sur le terrain, à l'oeil nu, sans équipement particulier.

L'invention permet 1) d'identifier le composé ou le mélange de composés qui dégrade le plus efficacement un polymère ou un mélange de polymères et 2) de classer un ensemble de composés ou de mélange de composés par rapport à leur cinétique de dégradation d'un polymère ou d'un mélange de polymères.

L'invention permet si on le souhaite grâce à la détection par interférométrie de remonter à la perte de volume des dépôts solides induite par la dégradation du fait de la réaction enzymatique. Il permet de faire ceci soit de façon semi-quantitative dans le contexte d'un laboratoire à l'aide d'un simple microscope, soit de façon qualitative sur le terrain à l'œil nu.

Des avantages du procédé selon des variantes préférées de mise en oeuvre de l'invention sont les suivants :
- possibilité d'étudier une enzyme unique ou un cocktail d'enzymes,
- capacité à déposer un ensemble de polymères ou mélanges de polymères de compositions différentes, sur un même support, au niveau d'un même motif ou d'un macro-motif à un autre,
- détection de l'interaction enzyme-polymère sans utilisation de marqueur,
- niveau de sensibilité équivalent ou meilleur aux techniques biochimiques classiques utilisant un substrat fluorogène ou chromogène pour un temps d'incubation équivalent,
- possibilité de moduler la dynamique de détection en fonction du type d'échantillon testé (propriétés physico-chimiques du dépôt de glucides),
- intégration d'un double niveau d'analyse : a) macroscopique permettant de visualiser s'il y a hydrolyse ou pas, b) microscopique permettant d'extraire des données semi-quantitative sur les activités enzymatiques,

Dans le cadre du diagnostic fonctionnel d'écosystèmes microbiens ou de souches isolées, la capacité de fabriquer un test enzymatique à bas coût, jetable, et donnant rapidement une réponse est d'un intérêt certain. En effet, que ce soit pour des applications environnementales (performances de dégradation d'un polymère polluant), en santé humaine (dégradation du mucus intestinal par des commensales opportunistes, ou des pathogènes), ou en alimentation animale (performances de dégradation des fibres alimentaires par l'écosystème digestif ou par des cocktails d'enzymes exogènes rajoutés dans l'alimentation pour augmenter l'efficacité énergétique), le dosage semi-quantitatif des activités de dégradation de polymères est un pré-requis nécessaire à la caractérisation et à l'ingénierie des écosystèmes pour optimiser les services rendus (au niveau environnemental, ou pour la santé de l'hôte quand il s'agit d'écosystème humain ou animal).

L'utilisation actuelle d'enzymes dans certains secteurs industriels (textile, alimentation humaine et animale) demande au cours de la production de réaliser des tests pour vérifier la conformité du produit final, et le procédé selon l'invention trouve ainsi à s'appliquer également au contrôle qualité.

### Dispositif

L'invention concerne aussi un dispositif, notamment pour la mise en oeuvre du procédé tel que défini plus haut, comportant :
- un support,
- une pluralité de micro-dépôts individualisés portés par le support, l'épaisseur des micro-dépôts étant comprise entre 100 nm et 1500 nm et choisie pour permettre la formation d'une figure d'interférences lorsqu'éclairé par une lumière adaptée, de préférence monochromatique, chaque micro-dépôt comportant au moins un polymère.

L'invention concerne aussi un dispositif, particulièrement adapté pour la mise en oeuvre du procédé selon l'invention tel que défini plus haut, comportant :
- un support,
- une pluralité de micro-dépôts individualisés portés par le support, l'épaisseur des micro-dépôts étant comprise entre 100 nm et 1500 nm, permettant chacun la formation d'une figure d'interférences lorsqu'éclairé par une lumière adaptée, notamment monochromatique, chaque micro-dépôt comportant au moins un polymère.

La surface du ou des micro-dépôts peut être éclairée par une lumière adaptée, de préférence monochromatique.

Les caractéristiques de l'invention décrites ci-dessus en référence au procédé valent également pour les dispositifs, et inversement.

### Ensemble

L'invention a encore pour objet un ensemble comportant un dispositif selon l'invention et un composé interagissant avec ledit polymère pour conduire à une variation des dimensions et/ou de l'indice de réfraction des micro-dépôts. Cette variation peut résulter d'une réaction de dégradation enzymatique entre le polymère et le composé.

L'invention concerne aussi un ensemble comportant un dispositif selon l'invention et un composé interagissant avec le ou les polymères pour conduire à une variation des dimensions et/ou de l'indice de réfraction des micro-dépôts. Cette variation peut résulter d'une réaction de dégradation enzymatique entre le ou les polymères et le composé.

### Procédé de fabrication du dispositif

L'invention concerne encore un procédé de fabrication d'un dispositif selon l'invention, comportant le dépôt par impression par jet d'encre sur le support de points d'une encre contenant le ou les polymères pour former les micro-dépôts.

Selon un mode de réalisation préféré, ce procédé de fabrication comprend une étape de réticulation de l'encre de manière à convertir les points d'encre en des micro-dépôts solides individualisés.

Le procédé peut comporter la modification de la mouillabilité du support préalablement à l'impression des micro-dépôts, afin d'ajuster l'épaisseur des micro-dépôts, d'obtenir une forme convexe pour ceux-ci et de jouer sur l'homogénéité de l'épaisseur.

Selon une variante du procédé de fabrication du dispositif, le dépôt par impression sur le support s'effectue en plusieurs passages successifs superposés spatialement, de manière à obtenir des micro-dépôts multicouches, chaque passage permettant de déposer une couche d'encre.

De préférence, le nombre de passage est égal à deux. Cela permet de former sur le support des micro-dépôts comportant deux couches superposées, notamment avec une architecture coeur-coquille (« core-shell » en anglais). Dans ce cas, le micro-dépôt présente une première couche correspondant au coeur, et une deuxième couche correspond à la coquille.

La première couche peut être disposée sur le support, de préférence au contact de ce dernier, et peut être de forme lenticulaire.

La deuxième couche peut recouvrir au moins partiellement, de préférence intégralement, la première couche et peut présenter une forme complémentaire de la première couche.

Dans une première étape, on dépose lors d'un premier passage la première couche sur le support, de préférence au contact de ce dernier.

Dans une deuxième étape, on dépose lors d'un deuxième passage la deuxième couche de manière à ce que cette dernière vienne recouvrir au moins partiellement, de préférence intégralement, la première couche.

Le dépôt de la deuxième couche est de préférence effectué lorsque la première couche est réticulée.

Il est ainsi possible, en utilisant une encre différente dans la première et deuxième couche, d'obtenir des micro-dépôts constitués de couches de natures différentes, par exemple comportant chacune un polymère distinct, ou bien encore des ratios de polymères mélangés différents.

L'épaisseur des micro-dépôts multicouches est de préférence comprise entre 100 nm et 1 500 nm, mieux entre 100 et 1000 nm, l'épaisseur de chaque micro-dépôt multicouche passant avantageusement par un seul maximum.

La plus grande dimension des micro-dépôts multicouches est de préférence comprise entre 10 µm et 100 µm.

L'épaisseur de la première couche du micro-dépôt multicouche est de préférence comprise entre 30 nm et 1300 nm, mieux entre 70 nm et 800 nm.

La plus grande dimension de la première couche du micro-dépôt multicouche est de préférence comprise entre 5 µm et 95 µm.

### Encre aqueuse

L'invention a encore pour objet une cartouche pour imprimante à jet d'encre dans laquelle est conditionnée une encre, de préférence aqueuse, particulièrement adaptée à la mise en oeuvre du procédé de fabrication d'un dispositif selon l'invention, comportant :
- le ou les polymères, de préférence le 'polymère',
- un liant, de préférence une résine, notamment mélamine formaldéhyde, et
- un co-solvant organique choisi pour permettre la formation d'un micro-dépôt de forme convexe lors du séchage de l'encre, le co-solvant étant du diméthylsulfoxyde (DMSO).

De préférence, la teneur en polymère dans l'encre est comprise de 1 mg/mL à 10 mg/mL par rapport au volume de l'encre.

Dans le cas d'un mélange de polymères, les proportions de chacun des polymères dans le mélange sont choisies en fonction de l'application visée.

De préférence, la teneur en résine dans l'encre est comprise 0,01 mg/mL et 0,1 mg/mL par rapport au volume de l'encre.

Le ratio polymère(s)/résine peut être compris entre 100 et 300.

Le ratio polymère(s)/résine est de préférence égal à 200.

La viscosité de l'encre à 20°C est de préférence comprise entre 5 mPa.s et 20 mPa.s, préférentiellement égale à 15 mPa.s +/- 3 mPa.s., par exemple égale à 17 mPa.S.

La tension de surface est par exemple de 62 mN.m⁻¹, étant de préférence inférieure à 70 mN.m⁻¹.

L'encre peut comprendre au moins un agent filmogène, ce dernier permettant la formation aisée du micro-dépôt.

Ledit agent filmogène est choisi par exemple parmi : les polyallylamine, les polyacrylamide, les polyvinylpyrrolidone, et leurs copolymères.

Préférentiellement, ledit agent filmogène est le chlorohydrate de Poly(allylamine) PAH.

La teneur en agent filmogène dans l'encre est préférentiellement comprise entre 0% et 10% en volume.

L'encre peut comprendre au moins un agent catalytique, ce dernier permettant de faciliter la réticulation du micro-dépôt.

Ledit agent catalytique peut être choisi en fonction de son influence sur la température de recuit nécessaire à la formation du micro-dépôt.

Ledit agent catalytique est choisi par exemple parmi les acides.

Préférentiellement, ledit agent catalytique est l'acide chlorhydrique.

La teneur en agent catalytique dans l'encre est préférentiellement comprise entre 0% et 10% en volume.

L'encre est de préférence dépourvue de pigments ou de colorants.

La présence du co-solvant organique est utile pour éviter l'effet "tache de café" lors du séchage de l'encre, conduisant à la formation d'un dépôt d'épaisseur moins homogène sur le support. D'autres solvants que le DMSO sont possibles, par exemple l'éthylène glycol, ou le N,N-diméthylformamide (DMF), entre autres.

L'encre peut être conditionnée dans une cartouche pour imprimante à jet d'encre.

L'invention pourra être mieux comprise à la lecture de la description détaillée qui va suivre, d'exemples de mise en oeuvre non limitatifs de celle-ci, ainsi qu'à l'examen du dessin annexé, sur lequel :
- la figure 1 représente en vue de dessus un exemple de dispositif selon l'invention,
- la figure 2 représente de façon schématique à échelle agrandie un macro-motif,
- la figure 3 représente un détail de formation des micro-dépôts,
- la figure 4 illustre la formation de franges d'interférences sur les micro-dépôts,
- la figure 5 illustre l'utilisation du dispositif pour la détection d'une réaction d'hydrolyse,
- la figure 6 illustre l'effet du composé sur les micro-dépôts,
- les figures 7 et 8 illustrent des tests d'activité enzymatique effectués à l'aide de dispositifs selon l'invention, et
- la figure 9 est une comparaison de l'activité enzymatique selon différentes durées d'incubation, obtenue à partir d'un dispositif selon l'invention.

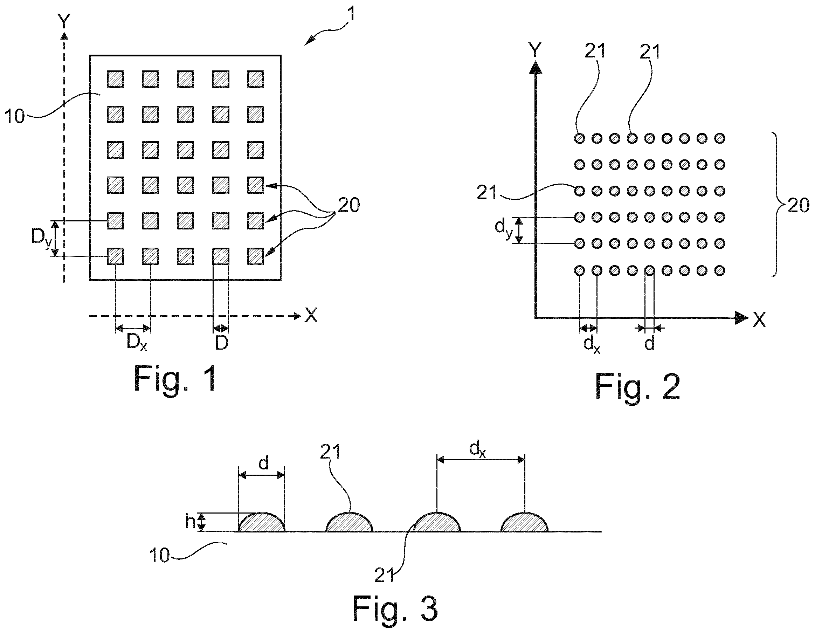

On a représenté à la figure 1 un exemple de dispositif 1 selon l'invention, comportant un support 10 qui est par exemple une plaque de silicium rendue hydrophobe, sur lequel sont formés des macro-motifs 20 sous la forme par exemple de carrés disposés avec des espacements respectifs D_{X} et D_{Y} dans des directions X et Y, correspondant à ceux des puits d'une plaque à puits conventionnelle.

Le côté D d'un macro-motif 20 fait par exemple entre 3 et 5 millimètres et les valeurs D_{X} et D_{Y} sont par exemple comprises entre 3 et 5 mm également.

Chaque macro-motif 20 qui présente une taille millimétrique est formé d'une trame de micro-dépôts 21, ceux-ci étant suffisamment rapprochés pour donner à l'oeil nu à chaque macro-motif 20 un aspect uniforme. Par exemple, l'écartement dₓ dans la direction X et celui d_{y} dans la direction Y, sont compris entre 50 et 340 micromètres, mieux entre 50 et 100 micromètres, le diamètre d d'un micro-dépôt 21 étant par exemple compris entre 10 et 100 micromètres et sa hauteur h (qui correspond à l'épaisseur) entre 100 nm et 1500 nm.

Dans l'exemple considéré, les micro-dépôts 21 sont déposés par impression jet d'encre avec un espacement régulier. L'encre présente une formulation adaptée à la formation d'une surface extérieure convexe.

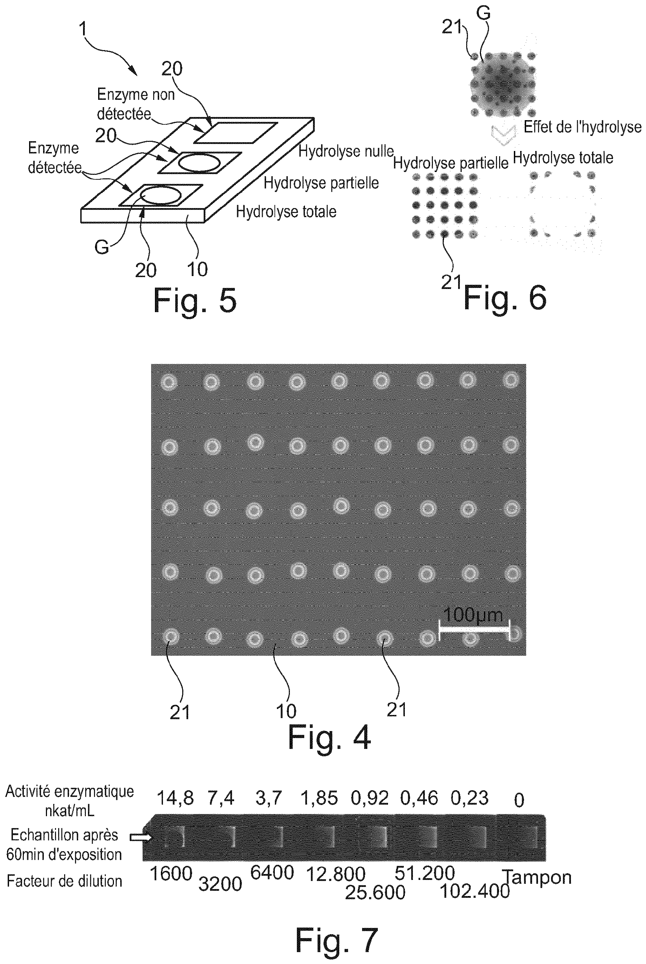

Les micro-dépôts 21 permettent, du fait de la différence d'indice de réfraction avec le support 10, ainsi qu'au caractère réfléchissant du support 10, la formation de franges d'interférences telles que des anneaux de Newton, comme illustré à la figure 4. Ces figures d'interférences peuvent être observées au microscope en éclairant le dispositif 1 avec de la lumière blanche ou monochromatique.

Le dispositif 1 peut être utilisé en déposant sur chaque macro-motif 20 une goutte G d'un composé à tester, comme illustré à la figure 5. Selon qu'une réaction de dégradation du polymère par hydrolyse se produit ou non, le changement d'aspect du macro-motif 20 peut être observé à l'oeil nu.

On a représenté sur la figure 5 en haut au milieu la situation où il n'y a pas de réaction entre l'enzyme et le polymère, la réaction d'hydrolyse étant nulle, et en bas à gauche le cas où l'hydrolyse est partielle, voire totale en bas à droite, ce qui permet la détection de l'enzyme. Cette approche qualitative peut être complétée par une approche quantitative par l'observation des figures d'interférences.

En effet, dans le cas d'une hydrolyse partielle, la modification des figures d'interférences qui peut être détectée par interférométrie permet de calculer le volume du micro-dépôt dégradé par la réaction d'hydrolyse. Dans le cas d'une hydrolyse totale, les micro-dépôts sont complètement détruits.

### EXEMPLES

### Exemple 1

### Fabrication d'un dispositif de détection

Un dispositif selon l'invention permettant de tester différentes enzymes ou mélanges d'enzymes vis-à-vis d'un polymère a été préparé selon le procédé de fabrication décrit plus haut.

### Première étape : Préparation de l'encre

Une première formulation d'encre aqueuse apte à l'impression par jet d'encre a été préparée selon les spécificités ci-après, où le polymère utilisé est l'arabinoxylane :

| **Encre mono-polymère (formulation 1)** | **Variante 1** | **Variante 2** |
|---|---|---|
| Arabinoxylane Mégazyme-wheat Arabinoxylan - Medium viscosity 22cSt - 323 Kd molecular weight | 5 mg/mL | 3 mg/mL |
| Mélamine formaldéhyde (résine) ^{®}Resimene AQ-7551 commercialisé par INEOS Melamines | 0,025 mg/mL | 0,015 mg/mL |
| DMSO CAS 67-68-5 | 10% vol | 10% vol |
| Chlorohydrate de Poly(allylamine) PAH commercialisé par Polyscience, Mw-120000- 200000 g/mol | 0,004 mg/mL | 0,004 mg/mL |
| Acide Chlorhydrique HCl | 0,01mM | 0,01mM |

La viscosité de l'encre obtenue selon la variante 1 de la formulation 1 est de 17 mPa.s (à la température d'éjection 20-30°C) et la tension de surface est de l'ordre de 60 N/m (à la température d'éjection).

Dans le cas de la variante 1 de la formulation 1, le ratio polymère/résine est de 200 (5/0,025).

Dans le cas de la variante 2 de la formulation 1, le ratio polymère/résine est également de 200 (3/0,015).

Ci-dessous, une seconde formulation où le polymère utilisé est le bétaglucan, et une troisième formulation où les polymères utilisés sont l'arabinoxylane et le bétaglucan (encre avec mélange de polymères 50%/50%), sont proposées à titre d'exemplification de l'invention :

| **Encre mono-polymère (formulation 2)** | **Variante 1** | **Variante 2** |
|---|---|---|
| Bétaglucan | 7 mg/mL | 3 mg/mL |
| Mélamine formaldéhyde (résine) ^{®}Resimene AQ-7551 commercialisé par INEOS Melamines | 0,025 mg/mL | 0,015 mg/mL |
| DMSO CAS 67-68-5 | 10% vol | 10% vol |
| Chlorohydrate de Poly(allylamine) PAH commercialisé par Polyscience, Mw-120000- 200000 g/mol | 0,004 mg/mL | 0,004 mg/mL |
| Acide Chlorhydrique HCl | 0,01mM | 0,01mM |

Dans le cas de la variante 1 de la formulation 2, le ratio polymère/résine est de 280 (7/0,025).

Dans le cas de la variante 2 de la formulation 2, le ratio polymère/résine est également de 200 (3/0,015).

| **Encre multi-polymères (formulation 3)** | **Variante 1** | **Variante 2** |
|---|---|---|
| Arabinoxylane Mégazyme-wheat Arabinoxylan - Medium viscosity 22cSt - 323 Kd molecular weight | 2,5 mg/mL | 1,5 mg/mL |
| Bétaglucan | 2,5 mg/mL | 1,5 mg/mL |
| Mélamine formaldéhyde (résine) ^{®}Resimene AQ-7551 commercialisé par INEOS Melamines | 0,025 mg/mL | 0,015 mg/mL |
| DMSO CAS 67-68-5 | 10% vol | 10% vol |
| Chlorohydrate de Poly(allylamine) PAH commercialisé par Polyscience, Mw-120000- 200000 g/mol | 0,004 mg/mL | 0,004 mg/mL |
| Acide Chlorhydrique HCl | 0,01mM | 0,01mM |

Dans le cas de la variante 1 de la formulation 3, le ratio polymères/résine est de 200 ((2,5+2,5)/0,025).

Dans le cas de la variante 2 de la formulation 3, le ratio polymères/résine est également de 200 ((1,5+1,5)/0,015).

### Deuxième étape : Modification du support

Une galette de silicium est utilisée comme support.

Afin d'obtenir des dépôts de forme convexe et éviter l'étalement des gouttelettes, la face supérieure de la galette est traitée par C₄F₈ pour être rendue hydrophobe.

### Troisième étape : Impression par jet d'encre

L'encre préalablement préparée selon la variante 1 de la formulation 1 a été chargée dans une imprimante à jet d'encre et des points d'encre sont imprimés sur le support, selon des points de trame.

Les paramètres d'impression sont :
- température d'éjection de l'encre : température ambiante (20°C-30°C),
- volume d'éjection des gouttelettes (par micro-dépôt) : 65 pL +/- 5 pL,
- épaisseur de micro-dépôt : inférieure à 1 µm,
- vitesse d'éjection des gouttelettes : 5 à 6 m/s, et
- macro-motif : matrice carrée de 4 cm de côté avec espacement entre deux micro-dépôts au sein du macro-motif égal à 70 µm.

### Quatrième étape : Réticulation thermique des dépôts d'encre

Le support sur lequel les points d'encre liquide ont été déposés est placé à 130°C pendant 10 à 180 minutes jusqu'à réticulation complète de la résine et solidification des micro-dépôts.

### Mise en œuvre du dispositif de détection

Le dispositif ainsi fabriqué a été mis en oeuvre pour étudier la cinétique de dégradation du polymère présent dans les dépôts, à savoir l'arabinoxylane (AX), par des solutions enzymatiques de xylanase commerciale présentant chacune un niveau d'activité différent.

Tout d'abord, le dispositif a été immergé dans de l'eau à 37°C pendant 2 heures, puis immergé dans une solution aqueuse de BSA (albumine de sérum bovin) à 0,25 g/L à 37°C pendant 1 heure, afin de passiver la surface entre les dépôts de polymère, ce qui améliore la sensibilité des mesures.

Dans cet exemple, la protéine employée en tant qu'agent de passivation est la BSA. Toutefois, l'invention n'est pas limitée à ce cas particulier.

Par exemple, on peut utiliser comme agent de passivation des protéines autres que la BSA, telles que l'ovalbumine ou le lysozyme.

La gamme de concentration en agent de passivation dans le bain dans lequel le dispositif est immergé est préférentiellement comprise entre 0,1g/L et 1g/L.

Des solutions de xylanase de concentrations différentes ont été réalisées, présentant des activités enzymatiques allant de 0,23 nkat/mL (dilution à 102 400 - test n°2) jusqu'à 14,8 nkat/mL (dilution à 1 600 - test n°8).

Une goutte de 7 µL de chacune de ces solutions est déposée sur un macro-motif correspondant. A titre de témoin, une goutte de tampon acétate est déposée sur un autre motif.

Après 60 minutes d'incubation à température ambiante, rinçage à l'eau et séchage du dispositif, des résultats différents pour chaque concentration ont été observées à l'œil nu (cf. Tableau ci-dessous).

| N° test | Activité enzymatique (nkat/mL) | Facteur de dilution (par rapport à la solution commerciale de xylanase) | Résultat observé (à l'œil nu) |
|---|---|---|---|
| 1 (témoin) | 0 | - | - |
| 2 | 0,23 | 102 400 | - |
| 3 | 0,46 | 51 200 | - |
| 4 | 0,92 | 25 600 | + |
| 5 | 1,85 | 12 800 | ++ |
| 6 | 3,7 | 6 400 | +++ |
| 7 | 7,4 | 3 200 | +++ |
| 8 | 14,8 | 1 600 | +++ |

Ce test a permis d'estimer un seuil de sensibilité approximativement situé à 0,92 nkat/mL (soit 6,4.10⁻³ nkat).

### Exemple 2

La figure 7 représente une photographie d'un ensemble de macro-motifs selon l'invention ayant été mis en contact avec différentes concentrations de xylanase (14,8 - 0,23 nkat/mL) durant 60 minutes après hydratation par immersion dans de l'eau pendant 2 heures à 37°C suivie d'une passivation pendant 1 heure dans une solution de BSA à 0,25 g/L à 37°C.

Cette photographie fait apparaître la limite de détection à l'oeil nu pour un facteur de dilution de 25 600.

### Exemple 3

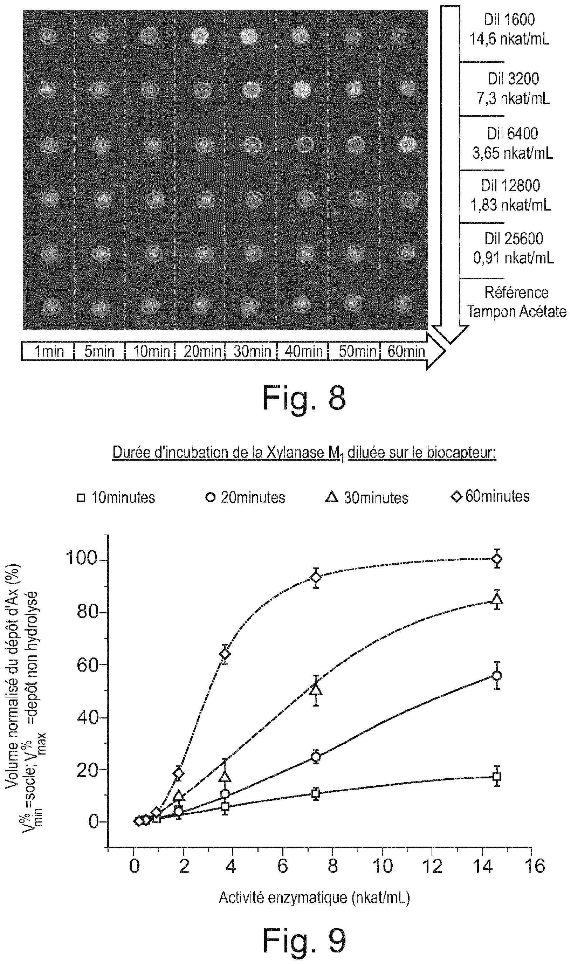

La figure 8 représente une matrice d'images de micro-dépôts, choisis aléatoirement dans les macro-motifs exposés à différentes concentrations d'enzyme permettant de quantifier l'action de l'enzyme sur l'AX. La xylanase est suspendue à des concentrations entre 0,45 et 14,6 nkat/mL pour différents temps d'exposition.

La représentation de la cinétique de dégradation est donnée à la figure 8. Elle montre que le seuil de sensibilité est compris entre 1,83 et 0,91 nkat/mL pour une incubation de 30 minutes. Dans le cas d'une incubation deux fois plus importante (60 minutes), ce seuil se situe entre 0,45 et 0,91 nkat/mL.

## Revendications

1. Procédé de détection de la sensibilité d'un ou plusieurs polymères et/ou d'un ou plusieurs mélanges de polymères à un composé, comportant les étapes consistant à :
- exposer une pluralité de micro-dépôts individualisés (21) comportant le ou les polymères et/ou le ou les mélanges de polymères au composé, et
- détecter par interférométrie une variation d'aspect d'un ensemble de micro-dépôts exposé au composé et/ou une variation des dimensions et/ou de l'indice de réfraction d'au moins l'un des micro-dépôts exposé au composé, liée(s) à une interaction entre le ou les polymères et/ou le ou les mélanges de polymères et le composé.

2. Procédé selon la revendication 1, l'épaisseur (h) des micro-dépôts étant choisie pour permettre la formation d'une figure d'interférences lorsqu'éclairé avec une lumière adaptée, étant de préférence comprise entre 100 nm et 1 500 nm.

3. Procédé selon la revendication 1 ou 2, la plus grande dimension (d) des micro-dépôts étant comprise entre 10 µm et 100 µm, et/ou l'épaisseur de chaque micro-dépôt passant par un seul maximum, et/ou chaque micro-dépôt (21) ayant une surface extérieure convexe.

4. Procédé selon l'une quelconque des revendications précédentes, une détection par interférométrie d'une variation du volume d'au moins un micro-dépôt étant effectuée, notamment par observation de la variation d'une figure d'interférences observée sur le micro-dépôt concerné, cette variation de volume ayant lieu sous l'effet d'une interaction entre le ou les polymères et/ou le ou les mélanges de polymères et le composé, la détection étant de préférence effectuée après grossissement de la figure d'interférences.

5. Procédé selon l'une quelconque des revendications précédentes, comportant la reconstruction du volume du micro-dépôt à partir de la localisation des franges d'interférences.

6. Procédé selon l'une quelconque des revendications précédentes, les micro-dépôts (21) étant disposés sous forme de points de trame, et/ou les micro-dépôts (21) étant disposés selon des macro-motifs (20), de préférence disjoints les uns des autres, étant de préférence disposés comme les puits d'une grille multi-puits pour dépôt robotisé.

7. Procédé selon l'une quelconque des revendications précédentes, les micro-dépôts (21) étant situés sur un support réfléchissant (10) et/ou hydrophobe (10).

8. Procédé selon l'une quelconque des revendications précédentes, le composé étant une enzyme, l'interaction entre le composé et le polymère étant de préférence une dégradation du polymère par le composé, et/ou le ou les polymères étant des bio-polymères, notamment choisi dans le groupe constitué par les oligosaccharides et polysaccharides tels que la cellulose, le xylane, la pectine, le chitosane, la chitine, le xyloglucane, le bétaglucan, et l'arabinoxylane ; les peptides et les protéines tels que l'albumine de sérum bovin ou humain et la gluténine ; les acides nucléiques tels que les acides désoxyribonucléiques et les acides ribonucléiques ; la cutine, la subérine et la lignine, et/ou les micro-dépôts comportant une résine, notamment une résine thermodurcissable, en particulier une résine mélamine-formaldéhyde.

9. Dispositif (1) pour la mise en oeuvre du procédé selon l'une quelconque des revendications précédentes, comportant :
- un support (10),
- une pluralité de micro-dépôts individualisés (21) portés par le support, l'épaisseur des micro-dépôts étant comprise entre 100 nm et 1 500 nm et choisie pour permettre la formation d'une figure d'interférences lorsque les micro-dépôts sont éclairés par une lumière adaptée, de préférence monochromatique, chaque micro-dépôt comportant au moins un polymère.

10. Dispositif selon la revendication 9, la plus grande dimension des micro-dépôts (21) étant comprise entre 10 µm et 100 µm, et/ou l'épaisseur de chaque micro-dépôt (21) passant par un seul maximum, et/ou chaque micro-dépôt (21) ayant une surface extérieure convexe, et/ou les micro-dépôts (21) étant disposés sous forme de points de trame, et/ou les micro-dépôts (21) étant disposés selon des macro-motifs (20), de préférence disjoints les uns des autres, étant de préférence disposés comme les puits d'une grille multi-puits pour dépôt robotisé.

11. Dispositif selon la revendication 9 ou 10, le support (10) étant réfléchissant et/ou hydrophobe, notamment traité par un matériau fluoré.

12. Dispositif selon l'une quelconque des revendications 9 à 11, le ou les polymères étant dégradables par une enzyme ou un ensemble d'enzymes, et/ou le ou les polymères étant des bio-polymères, notamment choisi dans le groupe constitué par les oligosaccharides et polysaccharides tels que la cellulose, le xylane, la pectine, le chitosane, la chitine, le xyloglucane, le bétaglucan, et l'arabinoxylane ; les peptides et les protéines tels que l'albumine de sérum bovin ou humain et la gluténine ; les acides nucléiques tels que les acides désoxyribonucléiques et les acides ribonucléiques ; la cutine, la subérine et la lignine, et/ou les micro-dépôts comportant une résine, notamment une résine thermodurcissable, en particulier une résine mélamine-formaldéhyde.

13. Ensemble comportant un dispositif tel que défini dans l'une quelconque des revendications 9 à 12 et un composé interagissant avec ledit polymère, notamment par dégradation enzymatique, pour conduire à une variation des dimensions et/ou de l'indice de réfraction des micro-dépôts.

14. Procédé de fabrication d'un dispositif tel que défini dans l'une quelconque des revendications 9 à 12, comportant le dépôt par impression par jet d'encre sur le support (10) de points d'une encre contenant le ou les polymères pour former les micro-dépôts (21).

15. Cartouche pour imprimante à jet d'encre dans laquelle est conditionnée une encre pour la mise en oeuvre du procédé selon la revendication 14, l'encre comportant :
- le ou les polymères, dégradables par une enzyme, de préférence choisi parmi les oligosaccharides et polysaccharides tels que la cellulose, le xylane, la pectine, le chitosane, la chitine, le xyloglucane, le bétaglucan, et l'arabinoxylane ; les peptides et les protéines tels que l'albumine de sérum bovin ou humain et la gluténine ; les acides nucléiques tels que les acides désoxyribonucléiques et les acides ribonucléiques ; la cutine, la subérine et la lignine,
- un liant, de préférence une résine, notamment mélamine formaldéhyde, et
- un co-solvant organique choisi pour permettre la formation d'un micro-dépôt de forme convexe lors du séchage de l'encre, le co-solvant étant du DMSO.

## Patentansprüche

1. Verfahren zur Detektion der Empfindlichkeit eines oder mehrerer Polymere und/oder einer oder mehrerer Polymermischungen gegenüber einer Verbindung, wobei es die folgenden Schritte aufweist:
- Einwirkenlassen der Verbindung auf eine Mehrzahl individualisierter Mikroabscheidungen (21), welche das oder die Polymere und/oder die Polymermischung(en) aufweisen, und
- Detektieren, mittels Interferometrie, einer Veränderung des Aussehens einer Gruppe von Mikroabscheidungen, die der Verbindung ausgesetzt worden ist, und/oder einer Veränderung der Abmessungen und/oder des Brechungsindex mindestens einer der Mikroabscheidungen, die der Verbindung ausgesetzt worden ist, die mit einer Wechselwirkung zwischen dem bzw. den Polymer(en) und/oder der bzw. den Polymermischung(en) und der Verbindung in Zusammenhang steht.

2. Verfahren nach Anspruch 1, wobei die Dicke (D) der Mikroabscheidungen so gewählt wird, dass bei Beleuchtung mit einem geeignetem Licht die Bildung eines Interferenzmusters ermöglicht wird, wobei sie vorzugsweise zwischen 100 nm und 1.500 nm liegt.

3. Verfahren nach Anspruch 1 oder 2, wobei die größte Abmessung (d) der Mikroabscheidungen zwischen 10 µm und 100 µm liegt und/oder die Dicke jeder Mikroabscheidung ein einziges Maximum durchläuft und/oder jede Mikroabscheidung (21) eine konvexe Außenfläche aufweist.

4. Verfahren nach einem der vorhergehenden Ansprüche, wobei eine Detektion mittels Interferometrie einer Volumenveränderung mindestens einer Mikroabscheidung, insbesondere durch Beobachtung der Veränderung eines an der betreffenden Mikroabscheidung beobachteten Interferenzmusters, durchgeführt wird, wobei diese Volumenveränderung unter der Wirkung einer Wechselwirkung zwischen dem bzw. den Polymer(en) und/oder der bzw. den Polymermischung(en) und der Verbindung erfolgt, wobei die Detektion vorzugsweise nach Vergrößerung des Interferenzmusters erfolgt.

5. Verfahren nach einem der vorhergehenden Ansprüche, das die Rekonstruktion des Volumens der Mikroabscheidung aus der Lage der Interferenzstreifen umfasst.

6. Verfahren nach einem der vorhergehenden Ansprüche, wobei die Mikroabscheidungen (21) in Form von Rasterpunkten angeordnet sind und/oder die Mikroabscheidungen (21) gemäß Makromustern (20), vorzugsweise voneinander getrennt, angeordnet sind, vorzugsweise wie die Vertiefungen eines Gitters mit mehreren Vertiefungen für eine Abscheidung mittels Roboter angeordnet sind.

7. Verfahren nach einem der vorhergehenden Ansprüche, wobei sich die Mikroabscheidungen (21) auf einem reflektierenden (10) und/oder hydrophoben Träger (10) befinden.

8. Verfahren nach einem der vorhergehenden Ansprüche, wobei die Verbindung ein Enzym ist, wobei es sich bei der Wechselwirkung zwischen der Verbindung und dem Polymer vorzugsweise um einen Abbau des Polymers durch die Verbindung handelt und/oder es sich bei dem oder den Polymeren um Biopolymere handelt, die insbesondere aus der Gruppe ausgewählt sind, welche aus Oligosacchariden und Polysacchariden wie Cellulose, Xylan, Pektin, Chitosan, Chitin, Xyloglucan, Betaglucan und Arabinoxylan; Peptiden und Proteinen wie Rinder- oder Human-Serumalbumin sowie Glutenin; Nukleinsäuren wie Desoxyribonukleinsäuren und Ribonukleinsäuren; aus Cutin, Suberin und Lignin besteht, und/oder die Mikroabscheidungen ein Harz, insbesondere ein wärmehärtendes Harz, insbesondere ein Melamin-Formaldehyd-Harz, umfassen.

9. Vorrichtung (1) zur Durchführung des Verfahrens nach einem der vorhergehenden Ansprüche, wobei sie Folgendes aufweist:
- einen Träger (10),
- eine Mehrzahl an von dem Träger getragenen individualisierten Mikroabscheidungen (21), wobei die Dicke der Mikroabscheidungen zwischen 100 nm und 1.500 nm liegt und so gewählt ist, dass die Bildung eines Interferenzmusters ermöglicht wird, wenn die Mikroabscheidungen mit einem geeigneten, vorzugsweise monochromatischen Licht beleuchtet werden, wobei jede Mikroabscheidung mindestens ein Polymer umfasst.

10. Vorrichtung nach Anspruch 9, wobei die größte Abmessung der Mikroabscheidungen (21) zwischen 10 µm und 100 µm liegt und/oder die Dicke jeder Mikroabscheidung (21) ein einziges Maximum durchläuft und/oder jede Mikroabscheidung (21) eine konvexe Außenfläche aufweist und/oder die Mikroabscheidungen (21) in Form von Rasterpunkten angeordnet sind und/oder die Mikroabscheidungen (21) gemäß Makromustern (20) angeordnet sind, vorzugsweise voneinander getrennt, vorzugsweise wie die Vertiefungen eines Gitters mit mehreren Vertiefungen für die Abscheidung mittels Roboter angeordnet sind.

11. Vorrichtung nach Anspruch 9 oder 10, wobei der Träger (10) reflektierend und/oder hydrophob ist, insbesondere mit einem fluorhaltigen Material behandelt ist.

12. Vorrichtung nach einem der Ansprüche 9 bis 11, wobei das bzw. die Polymer(e) durch ein Enzym oder eine Gruppe von Enzymen abbaubar ist bzw. sind und/oder es sich bei dem oder den Polymeren um Biopolymere handelt, die insbesondere aus der Gruppe ausgewählt sind, welche aus Oligosacchariden und Polysacchariden wie Cellulose, Xylan, Pektin, Chitosan, Chitin, Xyloglucan, Betaglucan und Arabinoxylan; Peptiden und Proteinen wie Rinder- oder Human-Serumalbumin sowie Glutenin; Nukleinsäuren wie Desoxyribonukleinsäuren und Ribonukleinsäuren; aus Cutin, Suberin und Lignin besteht, und/oder die Mikroabscheidungen ein Harz, insbesondere ein wärmehärtendes Harz, insbesondere ein Melamin-Formaldehyd-Harz, umfassen.

13. Baugruppe, umfassend eine Vorrichtung nach einem der Ansprüche 9 bis 12 und eine Verbindung, die mit dem Polymer, insbesondere durch enzymatischen Abbau, wechselwirkt, um eine Veränderung der Abmessungen und/oder des Brechungsindex der Mikroabscheidungen herbeizuführen.

14. Verfahren zur Herstellung einer Vorrichtung nach einem der Ansprüche 9 bis 12, wobei es die Abscheidung mittels Tintenstrahldrucken auf dem Träger (10) von Punkten einer Tinte, die das bzw. die Polymer(e) enthält, zur Herstellung der Mikroabscheidungen (21) umfasst.

15. Kartusche für Tintenstrahldrucker, in der eine Tinte zur Durchführung des Verfahrens nach Anspruch 14 verpackt ist, wobei die Tinte Folgendes umfasst:
- das bzw. die Polymer (e), das bzw. die durch ein Enzym abbaubar ist bzw. sind, vorzugsweise ausgewählt aus Oligosacchariden und Polysacchariden wie Cellulose, Xylan, Pektin, Chitosan, Chitin, Xyloglucan, Betaglucan und Arabinoxylan; Peptiden und Proteinen wie Rinder- oder Human-Serumalbumin sowie Glutenin; Nukleinsäuren wie Desoxyribonukleinsäuren und Ribonukleinsäuren; aus Cutin, Suberin und Lignin,
- ein Bindemittel, vorzugsweise ein Harz, insbesondere ein Melamin-Formaldehyd-Harz, und
- ein organisches Co-Lösungsmittel, das so gewählt ist, dass beim Trocknen der Tinte die Bildung einer konvex geformten Mikroabscheidung ermöglicht wird, wobei das Co-Lösungsmittel vorzugsweise DMSO ist.

## Claims

1. Process for detecting the sensitivity of one or more polymers and/or of one or more mixtures of polymers to a compound, including the steps consisting in:
- exposing a plurality of individualized micro-deposits (21) including the polymer(s) and/or the mixture(s) of polymers to the compound, and
- detecting by interferometry a variation in appearance of a set of micro-deposits exposed to the compound and/or a variation in the dimensions and/or refractive index of at least one of the micro-deposits exposed to the compound, linked to an interaction between the polymer(s) and/or the mixture(s) of polymers and the compound.

2. Process according to Claim 1, the thickness (h) of the micro-deposits being chosen to allow the formation of an interference pattern when illuminated with a suitable light, preferably being between 100 nm and 1500 nm.

3. Process according to Claim 1 or 2, the largest dimension (d) of the micro-deposits being between 10 um and 100 µm, and/or the thickness of each micro-deposit passing through only one maximum, and/or each micro-deposit (21) having a convex outer surface.

4. Process according to any one of the preceding claims, detection by interferometry of a variation in the volume of at least one micro-deposit being performed, notably by observation of the variation of an interference pattern observed on the micro-deposit concerned, this variation in volume taking place under the effect of an interaction between the polymer(s) and/or the mixture(s) of polymers and the compound, the detection preferably being performed after magnification of the interference pattern.

5. Process according to any one of the preceding claims, including the reconstruction of the volume of the micro-deposit from the localization of the interference fringes.

6. Process according to any one of the preceding claims, the micro-deposits (21) being arranged in the form of raster dots, and/or the micro-deposits (21) being arranged in macro-patterns (20), which are preferably separated from each other, preferably being arranged like the wells of a multi-well grid for automated deposition.

7. Process according to any one of the preceding claims, the micro-deposits (21) being located on a reflective support (10) and/or a hydrophobic support (10) .

8. Process according to any one of the preceding claims, the compound being an enzyme, the interaction between the compound and the polymer preferably being a degradation of the polymer by the compound, and/or the polymer(s) being biopolymers, notably chosen from the group consisting of oligosaccharides and polysaccharides such as cellulose, xylan, pectin, chitosan, chitin, xyloglucan, beta-glucan and arabinoxylan; peptides and proteins such as bovine or human serum albumin and glutenin; nucleic acids such as deoxyribonucleic acids and ribonucleic acids; cutin, suberin and lignin, and/or the micro-deposits including a resin, notably a thermosetting resin, in particular a melamine-formaldehyde resin.

9. Device (1) for performing the process according to any one of the preceding claims, including:
- a support (10),
- a plurality of individualized micro-deposits (21) borne by the support, the thickness of the micro-deposits being between 100 nm and 1 500 nm and chosen to allow the formation of an interference pattern when the micro-deposits are illuminated with a suitable light, preferably monochromatic light, each micro-deposit including at least one polymer.

10. Device according to Claim 9, the largest dimension of the micro-deposits (21) being between 10 um and 100 µm, and/or the thickness of each micro-deposit (21) passing through only one maximum, and/or each micro-deposit (21) having a convex outer surface, and/or the micro-deposits (21) being arranged in the form of raster dots, and/or the micro-deposits (21) being arranged in macro-patterns (20), which are preferably separated from each other, preferably being arranged like the wells of a multi-well grid for automated deposition.

11. Device according to Claim 9 or 10, the support (10) being reflective and/or hydrophobic, notably treated with a fluorinated material.

12. Device according to any one of Claims 9 to 11, the polymer(s) being degradable by an enzyme or a set of enzymes, and/or the polymer(s) being biopolymers, notably chosen from the group consisting of oligosaccharides and polysaccharides such as cellulose, xylan, pectin, chitosan, chitin, xyloglucan, beta-glucan and arabinoxylan; peptides and proteins such as bovine or human serum albumin and glutenin; nucleic acids such as deoxyribonucleic acids and ribonucleic acids; cutin, suberin and lignin, and/or the micro-deposits including a resin, notably a thermosetting resin, in particular a melamine-formaldehyde resin.

13. Assembly including a device as defined in any one of Claims 9 to 12 and a compound interacting with said polymer, notably by enzymatic degradation, to lead to a variation in the dimensions and/or refractive index of the micro-deposits.

14. Process for manufacturing a device as defined in any one of Claims 9 to 12, including the deposition by inkjet printing onto the support (10) of dots of an ink containing the polymer(s) to form the micro-deposits (21) .

15. Inkjet printer cartridge in which an ink for performing the process according to Claim 14 is packaged, the ink including:
- polymer(s), which are degradable by an enzyme, preferably chosen from oligosaccharides and polysaccharides such as cellulose, xylan, pectin, chitosan, chitin, xyloglucan, beta-glucan and arabinoxylan; peptides and proteins such as bovine or human serum albumin and glutenin; nucleic acids such as deoxyribonucleic acids and ribonucleic acids; cutin, suberin and lignin,
- a binder, preferably a resin, notably a melamine-formaldehyde resin, and
- an organic cosolvent chosen to allow the formation of a convex-shaped micro-deposit during the drying of the ink, the cosolvent being DMSO.
